# EUROPÄISCHE PATENTSCHRIFT

(11) **EP 3 597 161 B1**
(45) Veröffentlichungstag und Bekanntmachung des Hinweises auf die Patenterteilung: **05.05.2021**
(21) Anmeldenummer: 19159347.4
(22) Anmeldetag: 26.02.2019
(51) Int. Cl.: A61G 3/08, B60R 22/02

(54) **SICHERUNGSVORRICHTUNG ZUR SICHERUNG EINES ROLLSTUHLS**
DEVICE FOR SECURING A WHEELCHAIR
DISPOSITIF DE FIXATION DESTINÉ À FIXER UN FAUTEUIL ROULANT

(30) Priorität: 19.07.2018 EP 18184424
(43) Veröffentlichungstag der Anmeldung: 22.01.2020
(73) Patentinhaber: MAGNA STEYR Fahrzeugtechnik AG & Co KG, 8041 Graz (AT)
(72) Erfinder: HOFER, Bernhard, 8053 Graz (AT); PASSEGGER, Wolfgang, 8430 Tillmitsch (AT)
(74) Vertreter: Zangger, Bernd

(56) Entgegenhaltungen:
- EP-A1- 1 717 098
- GB-A- 2 424 857
- US-B2- 8 469 431
- "Easilok 3 - The complete safety system", , 31. März 2007 (2007-03-31), XP055134200, Gefunden im Internet: URL:http://www.handicare.no/upload/Auto Norge/Dokumentasjon/brosjyrer/C-Sitteplass er/C07 Rullestolfeste el.-manuelt/Easilok 3/Easilok 3.pdf [gefunden am 2014-08-11]

## Beschreibung

### Gebiet der Erfindung

Die vorliegende Erfindung betrifft eine Sicherungsvorrichtung zur Sicherung eines Rollstuhls in einem Fahrzeug.

### Stand der Technik

Sicherungsvorrichtungen zur Sicherung von Rollstühlen in einem Fahrzeug sind an sich bekannt. Durch derartige Sicherungsvorrichtungen werden im Fahrzeug abgestellte Rollstühle und insbesondere auf den Rollstühlen sitzende Personen derart gesichert, dass diese bei starken Beschleunigungen des Fahrzeugs, insbesondere entgegen der Fahrtrichtung - beim Bremsen oder ruckartigen Anhalten des Fahrzeugs, beispielsweise bei einem Unfall - zurückgehalten werden. Solche Sicherungsvorrichtungen verwenden oft, wie auch übliche Rückhaltesysteme in Personenkraftwagen, Gurtsysteme zur Sicherung des Rollstuhls im Fahrzeug und/oder zur Sicherung der Person auf dem Rollstuhl.

Meist sind in Fahrzeugen wie Bussen oder ähnlichen Personenbeförderungsfahrzeugen separate Stellplätze vorgesehen, die ausschließlich für die Nutzung durch Rollstuhlfahrer gedacht sind. Im öffentlichen Verkehr werden oft Stellplätze bereitgestellt, die nur über eine geringfügige Sicherung der Rollstühle mittels einfacher Schlaufen und Bügel als Umkippschutz verfügen. Der Raum wird bei Nichtbenutzung durch Rollstuhlfahrer für Stehplätze und/oder für eine Nutzung durch Klappsessel mit geringem Sitzkomfort genutzt. US8469431 offenbart eine Sicherungsvorrichtung mit einem Sitz der eine Bank für eine Person aufweist.

### Zusammenfassung der Erfindung

Es ist eine Aufgabe der Erfindung, eine Sicherungsvorrichtung, zur Sicherung eines Rollstuhls in einem Fahrzeug, anzugeben, die eine zuverlässige Sicherung eines Rollstuhls ermöglicht und dabei bei Nichtbenutzung durch einen Rollstuhl eine komfortable Sitzmöglichkeit für andere Passagiere zur Verfügung stellt.

Die Lösung der Aufgabe erfolgt durch eine Sicherungsvorrichtung, zur Sicherung eines Rollstuhls in einem Fahrzeug, nach Anspruch 1, wobei die Sicherungsvorrichtung einen Sitz mit einer Sitzfläche und mit einer Lehne umfasst, wobei die Sitzfläche in einer Gebrauchsposition im Wesentlichen horizontal ausgerichtet ist, wobei die Sitzfläche über eine horizontale Schwenkachse nach oben in eine Vertikalposition geschwenkt werden kann, wobei die Lehne an ihrer Unterkante zumindest abschnittsweise verkürzt ausgebildet ist, so dass die Lehne nicht bis zur Schnittachse zwischen der Lehnen-Ebene und der Sitzflächen-Ebene reicht, so dass die Außenumfänge der beiden Antriebsräder des Rollstuhls, bei einer Annäherung des Rollstuhls von vorne an den Sitz, wenn sich dessen Sitzfläche in Vertikalposition befindet, hinter die Lehne gelangen können, so dass der Rollstuhl näher an die Lehne des Sitzes, in eine Aufnahmeposition, gelangen kann.

Erfindungsgemäß ist ein Sitz eines Fahrzeuges mit einer Sitzfläche ausgestattet, die in einer Gebrauchsposition, bei Nicht-Benutzung des Sitzes durch einen Rollstuhlfahrer, in üblicher Weise horizontal ausgerichtet ist. Um die Benutzung von Teilen des Sitzes zur Sicherung des Rollstuhls und/oder zur Sicherung einer Person auf dem Rollstuhl besser nutzen zu können, ermöglicht es der Sitz die Sitzfläche in eine aufrechte, vertikale Position zu bringen, in einer Weise die ein besonders nahes heranfahren des Rollstuhls an den Sitz ermöglicht. Die Lehne des Sitzes ist zumindest abschnittsweise, nämlich zumindest in den beiden Abschnitten entlang der Schnittachse zwischen Lehne und Sitzfläche in Gebrauchsstellung der Sitzfläche, in denen die Antriebsräder eines Rollstuhls zu liegen kommen sollen, verkürzt ausgebildet, also von dieser Schnittachse beabstandet. Mit anderen Worten endet die Lehne vor Erreichen der Sitzfläche in Gebrauchsstellung, ist also verkürzt ausgebildet, so dass ein Freiraum zwischen Lehne und Sitzfläche besteht. Wenn sich die Sitzfläche in Vertikalposition befindet, liegt somit die Unterkante der Lehne höher als die Schnittachse und bevorzugt auch höher als die Sitzfläche in Gebrauchsstellung und die Sitzfläche ist weggeschwenkt, so dass sie die Annäherung eines Rollstuhls, insbesondere der Antriebsräder des Rollstuhls, nicht hindert. Bei einer Annäherung des Rollstuhls von vorne an den Sitz können daher die Außenumfänge der beiden üblicherweise relativ großen Antriebsräder des Rollstuhls hinter die Lehne gelangen, so dass der Rollstuhl, insbesondere die Lehne des Rollstuhls, näher an die Lehne des Sitzes, in eine Aufnahmeposition, gelangen kann. Der Rollstuhl ist dabei in der Aufnahmeposition bevorzugt gleich orientiert wie der Sitz, das heißt die Lehne des Sitzes und die Lehne eines üblichen Rollstuhls liegen beide "hinten" in Fahrzeuglängsrichtung, die beiden Sitzflächen befinden sich "vor" den Lehnen in Fahrzeuglängsrichtung.

Die Bezeichnungen "vorne" und "hinten" beziehen sich in dieser Schrift jeweils auf die Fahrzeuglängsrichtung und die übliche Fahrtrichtung des Fahrzeuges.

Die Bezeichnungen "Lehne" sowie "Sitzfläche" beziehen sich in dieser Schrift jeweils auf die betreffenden nutzbaren Flächengebilde, die zum Anlehnen bzw. zum Sitzen dienen, und umfassen nicht weitere Gestänge, Rahmen und dergleichen, die die betreffenden Flächen "Lehne" und "Sitzfläche" miteinander verbinden können.

Ein "Sitz" kann im Rahmen der vorliegenden Schrift auch eine Sitzbank sein, die Sitzfläche kann auch für mehrere Personen Platz bieten. Die Sitzfläche eines Sitzes kann beispielsweise auch mehrteilig ausgebildet sein.

Weiterbildungen der Erfindung sind in den abhängigen Ansprüchen, der Beschreibung sowie den beigefügten Zeichnungen angegeben.

Bevorzugt liegt die Sitzfläche in der Vertikalposition im Wesentlichen parallel zur Lehne und benachbart zur Lehne. Die Sitzfläche wird dazu bevorzugt vorne nach oben geschwenkt. Die Sitzfläche ist dann vorzugsweise an ihrer Hinterkante ebenfalls zumindest abschnittsweise verkürzt ausgebildet. Die Sitzfläche reicht dann ebenfalls nicht bis zur Schnittachse zwischen der Lehnen-Ebene und der Sitzflächen-Ebene. Die Unterkante der Sitzfläche liegt vorzugsweise in Vertikalstellung nicht tiefer, als die Unterkante der Lehne.

Gemäß einer anderen Ausführung steht die Sitzfläche in der Vertikalposition im Wesentlichen normal auf die Lehne. Die Sitzfläche wird bevorzugt seitlich in eine Vertikalposition geschwenkt. Die Sitzfläche wird insbesondere in diesem Fall vorzugsweise zweiteilig ausgebildet und die beiden Teile der Sitzfläche können in entgegengesetzte Richtungen aufgeschwenkt werden.

Vorzugsweise sind die Lehne und/oder die Sitzfläche über ihre gesamte Erstreckung entlang der Schnittachse zwischen der Lehnen-Ebene und der Sitzflächen-Ebene verkürzt ausgebildet.

Alternativ können die Lehne und/oder die Sitzfläche in zumindest zwei Abschnitten entlang der Schnittachse von der Schnittachse beabstandet sein, wobei die zwei Abschnitte so angeordnet sind, insbesondere so weit voneinander entfernt liegen, dass beide Antriebsräder eines üblichen Rollstuhls durch diese Abschnitte reichen können.

Bevorzugt sind die Lehne und die Sitzfläche zumindest abschnittsweise zumindest 15 cm verkürzt ausgebildet, insbesondere können diese Abstände über die gesamte Erstreckung entlang der Schnittachse bestehen.

Erfindungsgemäß umfasst der Sitz ein Gurtsystem, wobei das Gurtsystem dazu eingerichtet ist, eine Person auf dem Rollstuhl in der Aufnahmeposition zu sichern. Das selbe Gurtsystem kann bevorzugt zur Sicherung eines Passagiers auf der Sitzfläche in der Gebrauchsstellung verwendet werden, sowie auch zur Sicherung eines Passagiers der im Rollstuhl sitzt, welcher sich in der Aufnahmeposition am Sitz befindet, bei Vertikalposition der Sitzfläche.

Bevorzugt umfasst das Gurtsystem einen H-Gurt um eine Person auf dem Rollstuhl in der Aufnahmeposition zu sichern. Die beiden vertikalen Gurte des H-Gurtes können besonders bevorzugt in der Gebrauchsstellung der Sitzfläche von zwei Passagieren auf der Sitzfläche als herkömmliche 3-Punkt-Gurte verwendet werden.

Vorzugsweise umfasst die Sicherungsvorrichtung zumindest einen im Boden des Fahrzeugs montierten Rollstuhlsicherungsgurt und/oder zumindest einen im Sitz montierten Rollstuhlsicherungsgurt, wobei der oder jeder Rollstuhlsicherungsgurt eine Schlosszunge als Endstück umfasst, so dass der oder jeder Rollstuhlsicherungsgurt in ein jeweiliges am Rollstuhl ausgebildetes Gurtschloss aufgenommen werden kann.

Der Sitz umfasst bevorzugt eine Kopfstütze, wobei die Kopfstütze dazu eingerichtet ist, den Kopf einer Person auf dem Rollstuhl in der Aufnahmeposition abzustützen. Die selbe Kopfstütze kann bevorzugt auch von einem Passagier auf der Sitzfläche in der Gebrauchsstellung verwendet werden.

Bevorzugt ist die Kopfstütze verstellbar, insbesondere in ihrer Neigung oder in ihrer Position in Fahrzeuglängsrichtung, so dass die Kopfstütze dazu eingestellt werden kann, entweder den Kopf einer Person auf der Sitzfläche in Gebrauchsstellung oder den Kopf einer Person auf dem Rollstuhl in der Aufnahmeposition abzustützen, auch wenn die Position des Kopfes einer Person auf der Sitzfläche in Gebrauchsstellung üblicherweise weiter hinten liegt, als die Position des Kopfes einer Person auf dem Rollstuhl in der Aufnahmeposition.

Die Tiefe der Sitzfläche in der Gebrauchsstellung in Fahrzeuglängsrichtung ist bevorzugt so gering, dass die Oberkante der Sitzfläche in der Vertikalstellung unterhalb von üblichen Schiebegriffen des Rollsuhls in der Aufnahmeposition liegt. Die hochgeschwenkte Sitzfläche befindet sich dann in der Vertikalstellung, bei aufgenommenem Rollstuhl, nur auf Höhen zwischen den Antriebsrädern einerseits und den Griffen des Rollstuhls andererseits, so dass die Sitzfläche die Annäherung eines Rollstuhls noch weniger behindert.

Der Sitz ist als Bank ausgebildet, die in der Gebrauchsstellung zumindest zwei Personen auf der Sitzfläche Platz bietet. Der Sitz umfasst zumindest zwei Kopfstützen und zumindest zwei Gurte für Passagiere auf der Sitzfläche.

Der Sitz, insbesondere die Sitzfläche, hat entlang der horizontalen Schnittachse zwischen Lehne und Sitzfläche bevorzugt eine Erstreckung die größer ist, als die Breite des Rollstuhls, bzw. eines üblichen Rollstuhls.

### Kurzbeschreibung der Zeichnungen

Die Erfindung wird im Folgenden beispielhaft unter Bezugnahme auf die Zeichnungen beschrieben.
- Fig. 1: ist eine schematische Ansicht einer erfindungsgemäßen Sicherungsvorrichtung zur Sicherung eines Rollstuhls in einem Fahrzeug von der Seite (links, mit Rollstuhl und Rollstuhlfahrer) und von vorne (mitte, ohne Rollstuhl und Rollstuhlfahrer), sowie des Gurtsystems der Sicherungsvorrichtung alleine (rechts).
- Fig. 2: ist eine schematische Ansicht einer erfindungsgemäßen Sicherungsvorrichtung gemäß Fig. 1 von der Seite, mit Rollstuhl jedoch ohne Rollstuhlfahrer, und zeigt die Position des Details X.
- Fig. 3: ist eine schematische Detaildarstellung des Details X gemäß Fig. 2.
- Fig. 4: ist eine schematische Ansicht einer alternativen erfindungsgemäßen Sicherungsvorrichtung zur Sicherung eines Rollstuhls in einem Fahrzeug von der Seite (links, mit Rollstuhl und Rollstuhlfahrer) und von vorne (mitte, ohne Rollstuhl und Rollstuhlfahrer), sowie des Gurtsystems der Sicherungsvorrichtung alleine (rechts).
- Fig. 5: ist eine schematische Ansicht der Sicherungsvorrichtung gemäß Fig. 1 (mitte), wobei sich das Gurtsystem der Sicherungsvorrichtung in einer alternativen Verwendungsstellung befindet.

### Detaillierte Beschreibung der Erfindung

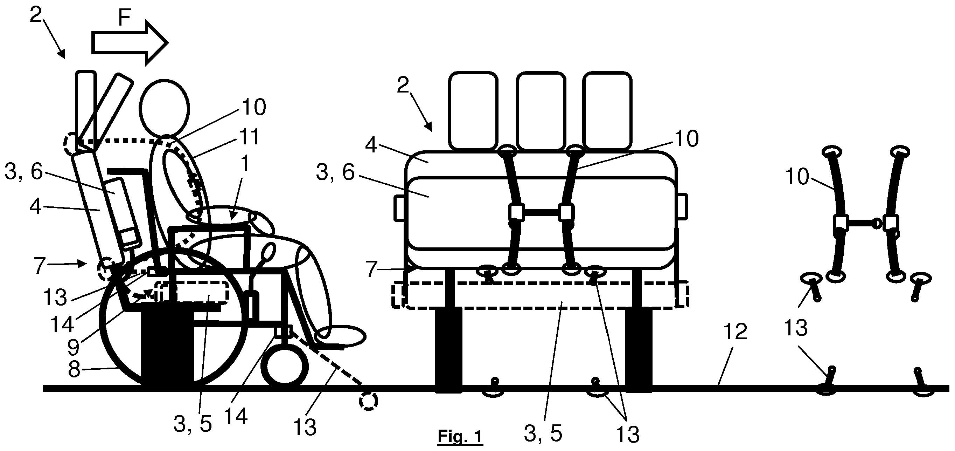

In Fig. 1 (links und mitte) ist eine erfindungsgemäße Sicherungsvorrichtung zur Sicherung eines Rollstuhls in einem Fahrzeug dargestellt - links mit einer Person in einem Rollstuhl in einer Aufnahmeposition am Sitz der Sicherungseinrichtung und rechts ohne Rollstuhl.

Die Sicherungsvorrichtung umfasst einen Sitz 2 mit einer Sitzfläche 3 und mit einer Lehne 4.

Der Sitz ist als Bank ausgebildet, die in einer Gebrauchsposition 5 zumindest zwei Personen oder auch drei Personen auf der Sitzfläche Platz bietet.

Die Sitzfläche 3 ist in einer Gebrauchsposition 5 im Wesentlichen horizontal ausgerichtet, wie für Sitzflächen allgemein üblich. Die Sitzfläche 3 ist in der Gebrauchsposition 5 in Fig. 1 lediglich mit gestrichelten Linien eingezeichnet.

Über eine horizontale Schwenkachse kann die Sitzfläche 3 jedoch nach oben, in eine Vertikalposition 6, geschwenkt werden, die in Fig. 1 als normale, durchgezogene Linie dargestellt ist.

Die Sitzfläche 3 liegt in der Vertikalposition 6 im Wesentlichen parallel zur Lehne 4 und benachbart zur Lehne 4.

Die Lehne 4 ist an ihrer Unterkante 7 verkürzt ausgebildet, so dass die Lehne 4 nicht bis zur Schnittachse zwischen der Lehnen-Ebene und der Sitzflächen-Ebene reicht. Unterhalb der Unterkante 7 der Lehne 4 - die Oberhalb der Sitzfläche 3 in Gebrauchsposition 5 liegt - befindet sich ein Freiraum, durch welchen beispielsweise die Antriebsräder eines Rollstuhls hindurchreichen können. Die Außenumfänge 8 der beiden Antriebsräder des Rollstuhls 1 können daher bei einer Annäherung des Rollstuhls 1 von vorne an den Sitz 2, wenn sich die Sitzfläche 3 des Sitzes 2 in Vertikalposition 6 befindet, hinter die Lehne 4 gelangen, so dass der Rollstuhl 1 näher an die Lehne 4 des Sitzes 2, in eine Aufnahmeposition, gelangen kann, wie in Fig. 1, linke Abbildung, dargestellt.

Die Bezeichnungen "vorne" und "hinten" beziehen sich dabei immer auf die übliche Fahrtrichtung "F" des Fahrzeuges, dessen Boden durch die Linie 12 angedeutet ist.

Der Sitz bzw. die Bank umfasst mehrere Kopfstützen, wobei zumindest eine Kopfstütze - nämlich hier die mittlere Kopfstütze - dazu eingerichtet ist, den Kopf einer Person auf dem Rollstuhl in der Aufnahmeposition abzustützen.

Zumindest eine Kopfstütze kann verstellbar sein, insbesondere in ihrer Neigung in Fahrzeuglängsrichtung - wie in Fig. 1 (links) dargestellt, so dass die Kopfstütze dazu eingestellt werden kann, entweder den Kopf einer Person auf der Sitzfläche 3 in Gebrauchsposition 5 oder den Kopf einer Person auf dem Rollstuhl 1 in der Aufnahmeposition abzustützen.

In der Ausführungsform der Sicherungsvorrichtung der Fig. 1 ist die Sitzfläche 3 an ihrer Hinterkante 9 ebenfalls verkürzt ausgebildet und erreicht nicht die gedachte Schnittachse zwischen der Lehnen-Ebene und der Sitzflächen-Ebene. Hierdurch endet die Unterkante der Sitzfläche 3 in Vertikalposition 6 zumindest gleich hoch, wie die Unterkante der Lehne 4, so dass der Freiraum unter der Lehne nicht durch die hochgeklappte Sitzfläche 3 blockiert wird.

Die Tiefe der Sitzfläche 3 ist in der Gebrauchsstellung 5 in Fahrzeuglängsrichtung (siehe Fahrtrichtung F) so gering, dass die Oberkante der Sitzfläche 3 in der Vertikalstellung 6 unterhalb der Höhe von üblichen Schiebegriffen des Rollsuhls 1 in der Aufnahmeposition liegt. Die Sitzfläche 3 liegt daher in der Höhendimension zwischen den Schiebegriffen und den Außenumfängen 8 der Antriebsräder eines aufgenommenen Rollstuhls 1.

Die Sicherungsvorrichtung umfasst auch ein Gurtsystem 10, zur Sicherung einer Person 11 auf einem aufgenommenen Rollstuhl 1 (eines Rollstuhlfahrers), wobei das Gurtsystem 10 in der Fig. 1 rechte Darstellung alleine dargestellt ist.

Das Gurtsystem 10 umfasst einen H-Gurt um eine Person 11 auf dem Rollstuhl 1 in der Aufnahmeposition zu sichern. Das Gurtsystem 10 ist dabei am Sitz 2 befestigt.

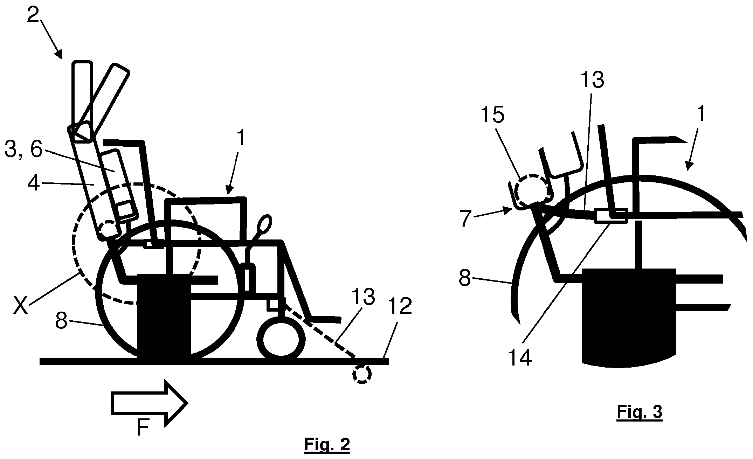

Die Sicherungsvorrichtung umfasst auch im Boden (12) des Fahrzeugs montierbare Rollstuhlsicherungsgurte (13), wobei jeder Rollstuhlsicherungsgurt 13 eine Schlosszunge als Endstück umfasst, so dass jeder Rollstuhlsicherungsgurt 13 in ein jeweiliges am Rollstuhl 1 ausgebildetes Gurtschloss 14 aufgenommen werden kann - siehe Fig. 2 und Fig. 3.

Fig. 3 zeigt die Anbindung eines Rollstuhlsicherungsgurts 13 am Sitz 2 genauer, in einem Detail X, der Fig. 2. Der Sicherungsgurt 13 kann von einem Gurtaufroller 15 in der Lehne 4 des Sitzes 2 ausgezogen werden.

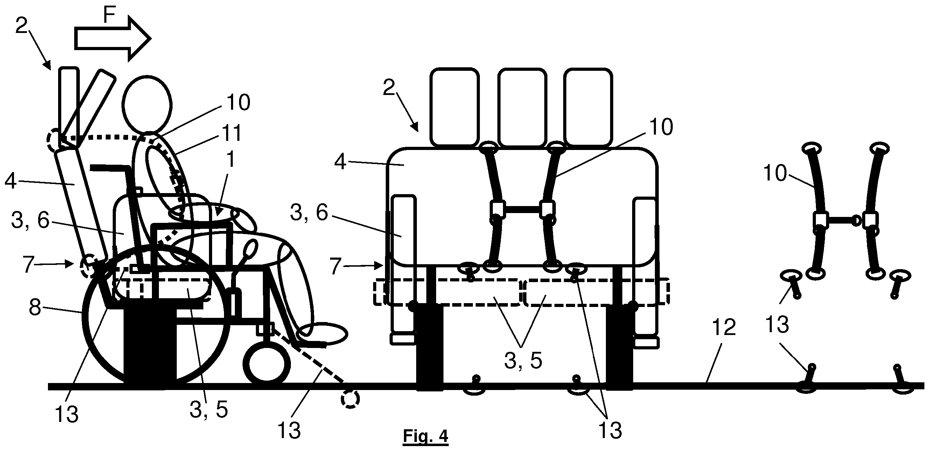

Fig. 4 zeigt - analog zu den drei Darstellungen der Fig. 1 - eine alternative erfindungsgemäße Sicherungsvorrichtung. Dabei steht die Sitzfläche 3 in der Vertikalposition 6 im Wesentlichen normal auf die Lehne 4. Genauer ist die Sitzfläche 3 hierbei zweiteilig ausgebildet und die beiden Teile der Sitzfläche 3 können zum Erreichen der Vertikalposition 6 in entgegengesetzte Richtungen seitlich hochgeschwenkt werden, so dass jeder der beiden Teile in der Vertikalposition 6 seitlich vertikal angeordnet ist, normal auf die Lehne 4 - siehe vor allem Fig. 4 mittlere Darstellung.

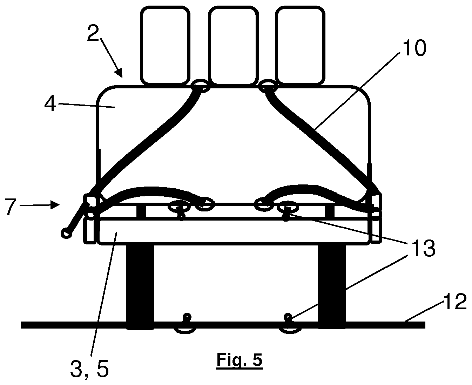

Fig. 5 zeigt das Gurtsystem 10 der Sicherungsvorrichtung in einer alternativen Verwendung: die selben vertikalen Gurte, die Teile des H-Gurts zur Sicherung einer Person in einem Rollstuhl in der Aufnahmeposition am Sitz 2 bilden, können auch zur Sicherung von zwei Personen, bei Verwendung der Sitzbank ohne Rollstuhl, in einer 3 Punktgurtkonfiguration des Gurtsystems 10, genutzt werden.

Die Erfindung kombiniert somit insgesamt vollwertige Sitzplätze einer Personenbeförderung mit einer Rollstuhlbeförderung. Dabei ist eine Sitzbank, Sitz 2, mit einer klappbaren Sitzfläche 3 versehen. Außerdem verfügt die Sitzbank 2 über eine Gurtsystem 10, vorzugsweise mit automatischen Gurtaufrollern 15. Im Idealfall wird ein H-Gurtsystem genutzt um die Kräfte im Crashfall besser auf den Körper des Rollstuhlfahrers 11 verteilen zu können. Ein zusätzliches Gurtsystem 13 ist für die separate Sicherung des Rollstuhls 1 vorgesehen. Außerdem ist eine zusätzliche Kopfstütze an der Sitzbank 2 installiert, die sich wie in einem Personenwagen nach vorn neigen läßt und in der Höhe anpassbar ist. Damit der Rollstuhl 1 platzsparend und optimal in den Passagierraum integriert werden kann, muss die Sitzbank 2 wie zuvor beschrieben ausgeführt sein. Damit der Rollstuhlfahrer möglichst nahe an der Kopfstütze positioniert werden kann, muss für die großen Hinterräder, nämlich die Antriebsräder des Rollstuhls 1, Platz geschaffen werden. Dies geschieht dadurch, dass sowohl die Sitzfläche 3 im hinteren Bereich ausgenommen ist als auch die Lehne 4 im unteren Bereich. Bei hochgeklappter Sitzfläche 3 kommt diese vorzugsweise unter den Griffen des Rollstuhls 1 zu liegen aber oberhalb der Räder bzw. des Außenumfangs der Antriebsräder 8.

Die Drehachse ist entsprechend auszulegen bzw. auch die Arme sind entsprechend zu formen damit die Sitzfläche 3 in der Vertikalposition in der gewünschten Position zu liegen kommt. Dabei kann das Hochklappen durch Federkraft unterstützt sein. Bei heruntergeklappter Sitzfläche 3 ist eine Verriegelung vorgesehen. Die gekürzte Lehne 4 lässt den Rollstuhl 1 ebenfalls weiter nach hinten rücken. Damit wird der Passagierraum optimal ausgenutzt und der Rollstuhlfahrer 11 in eine gute Position zur Kopfstütze gebracht.

Die Kopfstütze kann zusätzlich etwas dicker bzw. größer als gewöhnlich ausgeführt sein um den Abstand zum Kopf besser zu überbrücken. Durch diese Position des Rollstuhlfahrers können zum Beispiel in einer Vierersitzgruppe zwei normale gegenüberliegende Sitzplätze erhalten werden. Das H-Gurtsystem kann für die normale Sitzkonfiguration als herkömmlicher 3-Punktgurt genutzt werden, indem zusätzliche Gurtzungen am Gurtsystem vorhanden sind. Für die Rollstuhlsicherung sind Gurte mit automatischen Gurtaufrollern 15 vorgesehen, wobei Gurtschlösser am Rollstuhl 1 vorhanden sind, um eine rasche Sicherung des Rollstuhlfahrers zu ermöglichen. Diese Gurtschlösser sind am Rahmen fix montiert, beispielsweise nachgerüstet. Sie ermöglichen eine zuverlässige Fixierung als beispielsweise Hacken, die undefiniert am Rahmen angreifen. Somit befinden sich, bis auf die beiden Gurte am Boden des Fahrzeugs, alle Gurte auf dem Sitzsystem 1 und ermöglichen so einen einfachen Umbau eines Fahrzeuges.

Bei einer Alternativlösung ist die Sitzfläche 1 mittig geteilt und wird jeweils seitwärts hochgeklappt. Dadurch kann die Sitzfläche länger ausgebildet werden, insbesondere ohne Verkürzung.

### Bezugszeichenliste

- 1: Rollstuhl
- 2: Sitz
- 3: Sitzfläche
- 4: Lehne
- 5: Gebrauchsposition
- 6: Vertikalposition
- 7: Unterkante Lehne
- 8: Außenumfang eines Antriebsrades
- 9: Hinterkante Sitzfläche
- 10: Gurtsystem
- 11: Person auf dem Rollstuhl
- 12: Boden des Fahrzeugs
- 13: Rollstuhlsicherungsgurt
- 14: Gurtschloss
- 15: Gurtaufroller

- X: Detailausschnitt
- F: Fahrtrichtung

## Patentansprüche

1. Sicherungsvorrichtung zur Sicherung eines üblichen Rollstuhls (1) mit relativ großen Antriebsrädern in einem Fahrzeug, wobei die Sicherungsvorrichtung einen Sitz (2) mit einer Sitzfläche (3) und mit einer Lehne (4) umfasst, wobei die Sitzfläche (3) in einer Gebrauchsposition (5) im Wesentlichen horizontal ausgerichtet ist, wobei die Sitzfläche (3) über eine horizontale Schwenkachse nach oben in eine Vertikalposition (6) geschwenkt werden kann, wobei die Sitzfläche (3) in der Vertikalposition (6) im Wesentlichen parallel zur Lehne (4) und benachbart zur Lehne (4) liegt, wobei die Sitzfläche (3) an ihrer Hinterkante (9) zumindest abschnittsweise verkürzt ausgebildet ist, so dass die Sitzfläche (3) nicht bis zur Schnittachse zwischen der Lehnen-Ebene und der Sitzflächen-Ebene in der Gebrauchsposition (5) reicht, wobei die Sitzfläche (3) zumindest 10 cm verkürzt ist, also von dieser Schnittachse 10 cm beabstandet, oder wobei die Sitzfläche (3) in der Vertikalposition (6) im Wesentlichen normal auf die Lehne (4) steht, wobei die Sitzfläche (3) zweiteilig ausgebildet ist und die beiden Teile der Sitzfläche (3) zum Erreichen der Vertikalposition (6) in entgegengesetzte Richtungen aufgeschwenkt werden,
wobei die Lehne (4) an ihrer Unterkante (7) zumindest abschnittsweise verkürzt ausgebildet ist, so dass die Lehne (4) nicht bis zur Schnittachse zwischen der Lehnen-Ebene und der Sitzflächen-Ebene in der Gebrauchsposition (5) reicht, wobei die Lehne (4) zumindest 10 cm verkürzt ist, also von dieser Schnittachse cm beabstandet, so dass ein Teil der Außenumfänge (8) der beiden Antriebsräder des Rollstuhls (1), bei einer Annäherung des Rollstuhls (1) von vorne an den Sitz (2), wenn sich die Sitzfläche (3) des Sitzes (2) in Vertikalposition (6) befindet, hinter die Lehne (4) gelangen können, so dass der Rollstuhl (1) näher an die Lehne (4) des Sitzes (2), in eine Aufnahmeposition, gelangen kann, wobei der Rollstuhl (1) in der Aufnahmeposition gleich orientiert ist wie der Sitz (2), das heißt die Lehne (4) des Sitzes (2) und die Lehne des üblichen Rollstuhls (1) liegen beide hinten in Fahrzeuglängsrichtung, die beiden Sitzflächen befinden sich vor den Lehnen (4) in Fahrzeuglängsrichtung, **dadurch gekennzeichnet, dass** der Sitz (2) als Bank ausgebildet ist, die in der Gebrauchsstellung zumindest zwei Personen auf der Sitzfläche (3) Platz bietet, wobei die Bank zumindest zwei Kopfstützen umfasst und zumindest zwei Gurte für Passagiere auf der Sitzfläche (3) umfasst, wobei der Sitz (2) ein Gurtsystem (10) umfasst, wobei das Gurtsystem (10) dazu eingerichtet ist, eine Person (11) auf dem Rollstuhl (1) in der Aufnahmeposition zu sichern.

2. Sicherungsvorrichtung nach Anspruch 1,
**dadurch gekennzeichnet, dass** die Lehne (4) und/oder die Sitzfläche (3) über ihre gesamte Erstreckung entlang der Schnittachse zwischen der Lehnen-Ebene und der Sitzflächen-Ebene verkürzt ausgebildet sind.

3. Sicherungsvorrichtung nach zumindest einem der vorhergehenden Ansprüche,
**dadurch gekennzeichnet, dass** die Lehne (4) und/oder die Sitzfläche (3) zumindest abschnittsweise zumindest 15 cm verkürzt sind.

4. Sicherungsvorrichtung nach zumindest einem der vorhergehenden Ansprüche,
**dadurch gekennzeichnet, dass** das Gurtsystem (10) einen H-Gurt umfasst um eine Person (11) auf dem Rollstuhl (1) in der Aufnahmeposition zu sichern.

5. Sicherungsvorrichtung nach zumindest einem der vorhergehenden Ansprüche,
**dadurch gekennzeichnet, dass** die Sicherungsvorrichtung zumindest einen im Boden (12) des Fahrzeugs montierbaren Rollstuhlsicherungsgurt (13) und/oder zumindest einen im Sitz (2) montierten Rollstuhlsicherungsgurt (13) umfasst, wobei der oder jeder Rollstuhlsicherungsgurt (13) eine Schlosszunge als Endstück umfasst, so dass der oder jeder Rollstuhlsicherungsgurt (13) in ein jeweiliges am Rollstuhl (1) ausgebildetes Gurtschloss (14) aufgenommen werden kann.

6. Sicherungsvorrichtung nach zumindest einem der vorhergehenden Ansprüche,
**dadurch gekennzeichnet, dass** der Sitz eine Kopfstütze umfasst, wobei die Kopfstütze dazu eingerichtet ist, den Kopf einer Person auf dem Rollstuhl in der Aufnahmeposition abzustützen.

7. Sicherungsvorrichtung nach zumindest einem der vorhergehenden Ansprüche,
**dadurch gekennzeichnet, dass** die Kopfstütze verstellbar ist, so dass die Kopfstütze dazu eingestellt werden kann, entweder den Kopf einer Person auf der Sitzfläche in Gebrauchsstellung oder den Kopf einer Person auf dem Rollstuhl in der Aufnahmeposition abzustützen.

8. Vorrichtung umfassend eine Sicherungsvorrichtung nach zumindest einem der vorhergehenden Ansprüche und den Rollstuhl, wobei der Rollstuhl zwei Antriebsräder aufweist, wobei die Außenumfänge (8) der beiden Antriebsräder des Rollstuhls (1), bei einer Annäherung des Rollstuhls (1) von vorne an den Sitz (2), wenn sich die Sitzfläche (3) des Sitzes (2) in Vertikalposition (6) befindet, hinter die Lehne (4) gelangen können, so dass der Rollstuhl (1) näher an die Lehne (4) des Sitzes (2), in eine Aufnahmeposition, gelangen kann.

9. Vorrichtung nach Anspruch 8,
**dadurch gekennzeichnet, dass** die Vorrichtung das Fahrzeug umfasst, wobei die Sicherungsvorrichtung zumindest einen im Boden des Fahrzeugs montierten Rollstuhlsicherungsgurt umfasst, wobei der Rollstuhlsicherungsgurt eine Schlosszunge als Endstück umfasst, so dass der Rollstuhlsicherungsgurt in ein am Rollstuhl ausgebildetes Gurtschloss aufgenommen werden kann.

## Claims

1. Securing device for securing a customary wheelchair (1) having relatively large drive wheels in a vehicle, wherein the securing device comprises a seat (2) with a seat surface (3) and with a backrest (4), wherein the seat surface (3) is oriented substantially horizontally in a use position (5), wherein the seat surface (3) can be pivoted upwards via a horizontal pivot axis into a vertical position (6), wherein, in the vertical position (6), the seat surface (3) lies substantially parallel to the backrest (4) and adjacent to the backrest (4), wherein the seat surface (3) is shortened at least in sections at its rear edge (9) such that the seat surface (3) does not reach as far as the intersecting axis between the backrest plane and the seat surface plane in the use position (5), wherein the seat surface (3) is shortened by at least 10 cm, i.e. is spaced apart from said intersecting axis by 10 cm, or wherein, in the vertical position (6), the seat surface (3) stands substantially normally to the backrest (4), wherein the seat surface (3) is of two-part design and the two parts of the seat surface (3) are pivoted up in opposite directions in order to reach the vertical position (6), wherein the backrest (4) is shortened at least in sections at its lower edge (7) such that the backrest (4) does not reach as far as the intersecting axis between the backrest plane and the seat surface plane in the use position (5), wherein the backrest (4) is shortened by at least 10 cm, i.e. is spaced apart from said intersecting axis by 10 cm, such that a portion of the outer circumferences (8) of the two drive wheels of the wheelchair (1) can pass behind the backrest (4) when the wheelchair (1) approaches the seat (2) from the front and if the seat surface (3) of the seat (2) is in the vertical position (6), and therefore the wheelchair (1) nearer to the backrest (4) of the seat (2) can pass into a receiving position, wherein the wheelchair (1) is identically oriented to the seat (2) in the receiving position, that is to say the backrest (4) of the seat (2) and the backrest of the customary wheelchair (1) both lie at the rear in the longitudinal direction of the vehicle, and the two seat surfaces are located in front of the backrests (4) in the longitudinal direction of the vehicle, **characterized in that** the seat (2) is in the form of a bench which, in the use position, provides space for at least two people on the seat surface (3), wherein the bench comprises at least two headrests and comprises at least two belts for passengers on the seat surface (3), wherein the seat (2) comprises a belt system (10), wherein the belt system (10) is designed to secure a person (11) on the wheelchair (1) in the receiving position.

2. Securing device according to Claim 1,
**characterized in that** the backrest (4) and/or the seat surface (3) are/is shortened over their/its entire extent along the intersecting axis between the backrest plane and the seat surface plane.

3. Securing device according to at least one of the preceding claims,
**characterized in that** the backrest (4) and/or the seat surface (3) are/is shortened by at least 15 cm at least in sections.

4. Securing device according to at least one of the preceding claims,
**characterized in that** the belt system (10) comprises an H belt in order to secure a person (11) on the wheelchair (1) in the receiving position.

5. Securing device according to at least one of the preceding claims,
**characterized in that** the securing device comprises at least one wheelchair securing belt (13), which can be mounted in the floor (12) of the vehicle, and/or at least one wheelchair securing belt (13), which is mounted in the seat (2), wherein the or each wheelchair securing belt (13) comprises a buckle tongue as the end piece such that the or each wheelchair securing belt (13) can be received in a respective belt buckle (14) formed on the wheelchair (1).

6. Securing device according to at least one of the preceding claims,
**characterized in that** the seat comprises a headrest, wherein the headrest is designed to support the head of a person on the wheelchair in the receiving position.

7. Securing device according to at least one of the preceding claims,
**characterized in that** the headrest is adjustable, and therefore the headrest can be set either to support the head of a person on the seat surface in the use position or the head of a person on the wheelchair in the receiving position.

8. Device comprising a securing device according to at least one of the preceding claims and the wheelchair, wherein the wheelchair has two drive wheels, wherein the outer circumferences (8) of the two drive wheels (1) can pass behind the backrest (4) when the wheelchair (1) approaches the seat (2) from the front and if the seat surface (3) of the seat (2) is in the vertical position (6), and therefore the wheelchair (1) nearer to the backrest (4) of the seat (2) can pass into a receiving position.

9. Device according to Claim 8,
**characterized in that** the device comprises the vehicle, wherein the securing device comprises at least one wheelchair securing belt, which is mounted in the floor of the vehicle, wherein the wheelchair securing belt comprises a buckle tongue as an end piece, and therefore the wheelchair securing belt can be received in a belt buckle formed on the wheelchair.

## Revendications

1. Dispositif de fixation destiné à fixer un fauteuil roulant usuel (1) comportant des roues motrices relativement grandes dans un véhicule, le dispositif de fixation comportant un siège (2) doté d'une surface d'assise (3) et d'un dossier (4), la surface d'assise (3) étant orientée sensiblement horizontalement dans une position d'utilisation (5), la surface d'assise (3) pouvant être pivotée vers le haut dans une position verticale (6) par le biais d'un axe de pivotement horizontal, la surface d'assise (3) étant située sensiblement parallèlement au dossier (4) et de manière adjacente au dossier (4) dans la position verticale (6), la surface d'assise (3) étant réalisée de manière raccourcie au moins dans certaines régions au niveau de son bord arrière (9), de sorte que la surface d'assise (3) ne s'étende pas jusqu'à l'axe d'intersection entre le plan de dossiers et le plan de surfaces d'assise dans la position d'utilisation (5), la surface d'assise (3) étant raccourcie d'au moins 10 cm, c'est-à-dire espacée de 10 cm de cet axe d'intersection, ou
la surface d'assise (3) étant sensiblement normale au dossier (4) dans la position verticale (6), la surface d'assise (3) étant réalisée en deux parties et les deux parties de la surface d'assise (3) étant pivotées en sens opposés pour atteindre la position verticale (6),
le dossier (4) étant réalisé de manière raccourcie au moins dans certaines régions au niveau de son bord inférieur (7), de sorte que le dossier (4) ne s'étende pas jusqu'à l'axe d'intersection entre le plan de dossiers et le plan de surfaces d'assise dans la position d'utilisation (5), le dossier (4) étant raccourci d'au moins 10 cm, c'est-à-dire espacé de 10 cm de cet axe d'intersection, de sorte qu'une partie des périphéries extérieures (8) des deux roues motrices du fauteuil roulant (1), dans le cas d'un rapprochement du fauteuil roulant (1) du siège (2) par l'avant, lorsque la surface d'assise (3) du siège (2) se trouve dans la position verticale (6), puisse parvenir derrière le dossier (4), de sorte que le fauteuil roulant (1) puisse parvenir plus près du dossier (4) du siège (2), dans une position de réception, le fauteuil roulant (1) dans la position de réception étant orienté de manière identique au siège (2), c'est-à-dire que le dossier (4) du siège (2) et le dossier du fauteuil roulant usuel (1) sont situés tout deux à l'arrière dans la direction longitudinale de véhicule, les deux surfaces d'assise se situant devant les dossiers (4) dans la direction longitudinale de véhicule, **caractérisé en ce que** le siège (2) est réalisé sous forme de banquette qui, dans la position d'utilisation, offre de la place pour au moins deux personnes sur la surface d'assise (3), la banquette comportant au moins deux appuie-tête et au moins deux ceintures pour des passagers sur la surface d'assise (3), le siège (2) comportant un système de ceinture (10), le système de ceinture (10) étant conçu pour immobiliser une personne (11) sur le fauteuil roulant (1) dans la position de réception.

2. Dispositif de fixation selon la revendication 1, **caractérisé en ce que** le dossier (4) et/ou la surface d'assise (3) sont réalisés de manière raccourcie le long de l'axe d'intersection entre le plan de dossier et le plan de surface d'assise sur toute leur étendue.

3. Dispositif de fixation selon au moins l'une des revendications précédentes,
**caractérisé en ce que** le dossier (4) et/ou la surface d'assise (3) sont raccourcis d'au moins 15 cm au moins dans certaines régions.

4. Dispositif de fixation selon au moins l'une des revendications précédentes,
**caractérisé en ce que** le système de ceinture (10) comporte une ceinture en H afin d'immobiliser une personne (11) sur le fauteuil roulant (1) dans la position de réception.

5. Dispositif de fixation selon au moins l'une des revendications précédentes,
**caractérisé en ce que** le dispositif de fixation comporte au moins une ceinture de fixation de fauteuil roulant (13) pouvant être montée dans le plancher (12) du véhicule et/ou au moins une ceinture de fixation de fauteuil roulant (13) montée dans le siège (2), la ou chaque ceinture de fixation de fauteuil roulant (13) comportant une languette d'attache comme pièce d'extrémité, de sorte que la ou chaque ceinture de fixation de fauteuil roulant (13) puisse être reçue dans une attache de ceinture (14) respective réalisée sur le fauteuil roulant (1).

6. Dispositif de fixation selon au moins l'une des revendications précédentes,
**caractérisé en ce que** de siège comporte un appuie-tête, l'appuie-tête étant conçu pour supporter la tête d'une personne sur le fauteuil roulant dans la position de réception.

7. Dispositif de fixation selon au moins l'une des revendications précédentes,
**caractérisé en ce que** l'appuie-tête est déplaçable, de sorte que l'appuie-tête puisse être réglé pour supporter soit la tête d'une personne sur la surface d'assise dans la position d'utilisation soit la tête d'une personne sur le fauteuil roulant dans la position de réception.

8. Dispositif comportant un dispositif de fixation selon au moins l'une des revendications précédentes et le fauteuil roulant, le fauteuil roulant comprenant deux roues motrices, les périphéries extérieures (8) des deux roues motrices du fauteuil roulant (1), dans le cas d'un rapprochement du fauteuil roulant (1) du siège (2) par l'avant, lorsque la surface d'assise (3) du siège (2) se trouve dans la position verticale (6), pouvant parvenir derrière le dossier (4), de sorte que le fauteuil roulant (1) puisse parvenir plus près du dossier (4) du siège (2), dans une position de réception.

9. Dispositif selon la revendication 8,
**caractérisé en ce que** le véhicule comporte le dispositif, le dispositif de fixation comportant au moins une ceinture de fixation de fauteuil roulant montée dans le plancher du véhicule, la ceinture de fixation de fauteuil roulant comportant une languette d'attache comme pièce d'extrémité, de sorte que la ceinture de fixation de fauteuil roulant puisse être reçue dans une attache de ceinture réalisée sur le fauteuil roulant.
